Europäisches Patentamt

European Patent Office

Office européen des brevets

(19)

(11) Numéro de publication: **0 150 143 B1**

(12) **FASCICULE DE BREVET EUROPEEN**

(45) Date de publication du fascicule du brevet:
17.11.88

(51) Int. Cl.⁴: **G 05 D 16/06, F 17 C 13/04**

(21) Numéro de dépôt: **85400037.9**

(22) Date de dépôt: **09.01.85**

(54) **Appareil détendeur perfectionné.**

(30) Priorité: **19.01.84 FR 8400819**
**14.12.84 FR 8419207**

(43) Date de publication de la demande:
**31.07.85 Bulletin 85/31**

(45) Mention de la délivrance du brevet:
**17.11.88 Bulletin 88/46**

(84) Etats contractants désignés:
**AT BE CH DE GB IT LI LU NL SE**

(56) Documents cités:
**DE - C - 1 195 982**
**FR - A - 2 050 851**
**US - A - 3 900 045**

(73) Titulaire: **CLESSE-MANDET, 11 Avenue Gabriel-Péri,
F-78360 Montesson (FR)**

(72) Inventeur: **Lacour, Gilbert, 41 rue Camille Corot,
F-92500 Rueil Malmaison (FR)**

(74) Mandataire: **Durand, Yves Armand Louis et al, Cabinet Z.
Weinstein 20, Avenue de Friedland, F-75008 Paris (FR)**

**Description**

La présente invention a essentiellement pour objet un détendeur perfectionné utilisable dans des installations de distribution de gaz comprimé ou liquéfié, tel que gaz de ville, gaz butane, gaz propane etc.

On a déjà utilisé, pour des installations domestiques alimentées en gaz combustible, des détendeurs du type comprenant essentiellement un corps avec raccord d'entrée et de sortie du gaz, un couvercle monté sur ce corps, et une membrane manométrique retenue entre corps et couvercle et sur les deux faces de laquelle s'exercent respectivement la pression du gaz à contrôler et l'action d'un ressort de tarage.

Dans ces détendeurs, la membrane manométrique est généralement attelée à une tringlerie, levier ou analogue susceptible de commander un clapet en regard de l'orifice d'entrée du gaz dans le corps du détendeur. Ainsi, l'écoulement du gaz dans le détendeur peut être arrêté en cas de fermeture du débit de gaz, ou en cas d'incident de fonctionnement.

Toutefois, dans les détendeurs connus du type ci-dessus la tringlerie attelée à la membrane et portant le clapet augmente le nombre de pièces à prévoir à l'intérieur du détendeur, et accroît nécessairement les difficultés de montage de l'appareil ainsi que son encombrement, ce qui rend parfois son installation difficile sur des conduites de gaz peu accessibles. Il faut aussi ajouter que la complexité mécanique de ces détendeurs les rend coûteux et, comme on le comprend, leur fiabilité est d'autant plus aléatoire que les pièces qu'ils contiennent sont nombreuses.

On connait par ailleurs, d'après le document US-A-3 900 045 un appareil détendeur à membrane dont le couvercle comporte une butée faisant saillie vers l'intérieur du détendeur et sur laquelle peut prendre appui et pivoter la membrane, la position de la butée sur le couvercle étant telle qu'elle partage en deux surfaces inégales la membrane qui possède donc une fonction de levier susceptible d'obturer l'entrée du gaz dans le corps de l'appareil.

Mais la fiabilité de fonctionnement d'un tel appareil n'est pas satisfaisante s'il se produit des incidents en cours de fonctionnement et tels que notamment une chute de pression du gaz.

Aussi, la présente invention à pour but de remédier notamment aux inconvénients ci-dessus en proposant un détendeur perfectionné remplissant toutes les fonctions de sécurité désirées, d'une conception mécanique particulièrement simple et donc peu coûteuse, et présentant un excellente fiabilité de fonctionnement.

A cet effet, l'invention a pour objet un appareil détendeur pour gaz du type comprenant un corps avec raccord d'entrée et de sortie de gaz, un couvercle monté sur ce corps, une membrane manométrique montée entre corps et couvercle et sur une faces de laquelle s'exercent la pression du gaz à contrôler et sur l'autre face de laquelle s'exerce l'action d'un ressort de tarage, et au moins une première butée faisant saillie depuis le couvercle vers l'intérieur du détendeur et sur laquelle peut prendre appui et pivoter une partie rigide de ladite membrane, la position de cette butée sur le couvercle étant telle qu'elle partage en deux portions inégales ladite membrane qui possède ainsi une fonction de levier susceptible d'obturer l'entrée du gaz dans le corps de l'appareil, caractérisé en ce qu'il comporte:

– une deuxième butée de limitation de course de la membrane manométrique, cette deuxième butée étant solidaire du corps de l'appareil et située du côté de la portion relativement grande de ladite membrane,

– et/ou une troisième butée solidaire du corps de l'appareil, située sensiblement au droit de ladite première butée, et empêchant la membrane d'obturer l'orifice d'entrée du gaz dans l'appareil en cas d'incident tel que par exemple une chute de pression.

Cet appareil détendeur est encore caractérisé en ce que la membrane manométrique étant constituée par un plateau solidaire d'une membrane souple et déformable, ledit plateau comporte un bord tourné vers le haut et muni d'une ouverture coopérant avec un système à excentrique formant un robinet susceptible d'agir positivement sur la membrane et remplaçant la troisième butée qui est omise, alors que la deuxième butée subsiste.

Mais d'autres caractéristiques et avantages de l'invention apparaîtront mieux dans la description détaillée qui suit et se réfère aux dessins annexés, donnés uniquement à titre d'exemple et dans lesquels:

La figure 1 est une vue schématique en coupe axiale d'un détendeur selon l'art antérieur.

La figure 2 est une vue schématique en coupe axiale d'un détendeur conforme aux principes de l'invention.

La figure 3 est une vue schématique en coupe axiale d'une variante de réalisation du détendeur de la figure 2.

Les figures 4 et 5 illustrent schématiquement la membrane du détendeur de la figure 3 en position d'ouverture et de fermeture de l'orifice d'entrée du gaz dans le détendeur.

La figure 6 est une vue schématique et de dessus d'un exemple de réalisation de membrane manométrique.

La figure 7 est une vue de dessus d'un mode de réalisation particulier de siège de clapet.

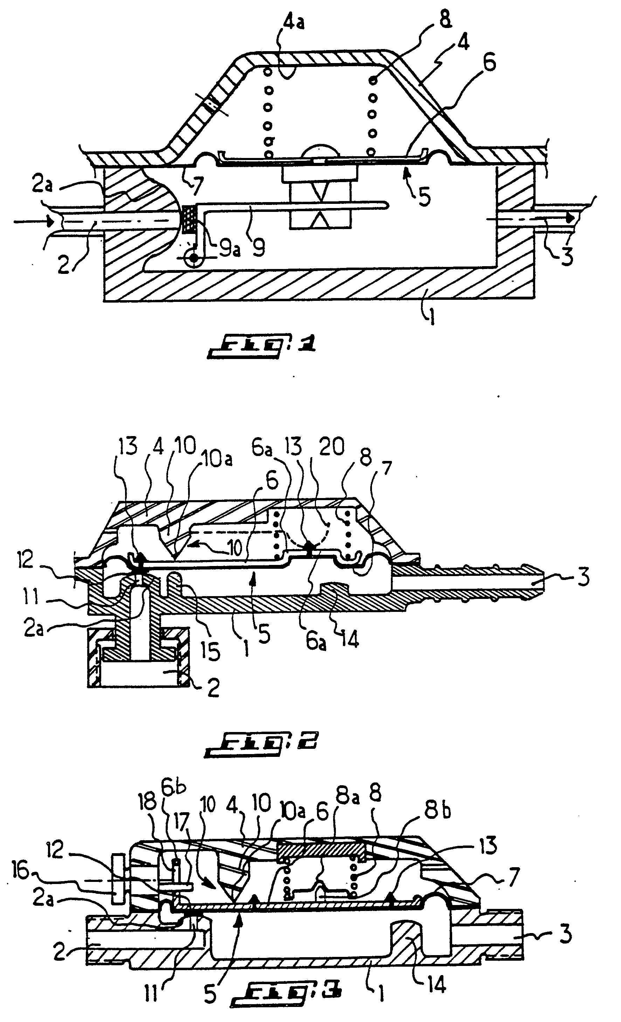

On se reportera tout d'abord à la figure 1 sur laquelle est représenté schématiquement un détendeur de type connu.

On voit qu'il comprend un corps 1 avec raccord d'entrée 2 et de sortie 3 du gaz, un couvercle 4 monté sur le corps 1 et une membrane manométrique 5 constituée par un plateau rigide 6 solidaire d'une membrane souple 7 dont le bord est fixé entre le corps 1 et le couvercle 4. Sur la face inférieure de la membrane 5 s'exerce la pression du gaz à contrôler, tandis que la face supérieure de ladite membrane est soumise à l'action d'un ressort de tarage 8 dont l'extrémité supérieure vient buter contre le fond 4a d'une cheminée axiale pratiquée dans le couvercle 4.

A la membrane 5 est attelée une tringlerie, un levier ou analogue 9 articulé sur le corps 1 et portant un clapet 9a. Comme on le comprend, ce clapet 9a est susceptible d'arrêter l'entrée du gaz dans le détendeur par application sur le siège 2a, lorsque la membrane 5 monte, c'est-à-dire lorsque la pression dans le détendeur augmente. Dans le cas contraire, le clapet 9a s'éloigne du siège 2a pour laisser le passage au gaz.

Conformément à l'invention, la tringlerie ou le levier 9 attelé à la membrane 5 et commandant le clapet sont supprimés, et c'est la membrane elle-même qui remplit les fonctions de clapet et de levier articulés.

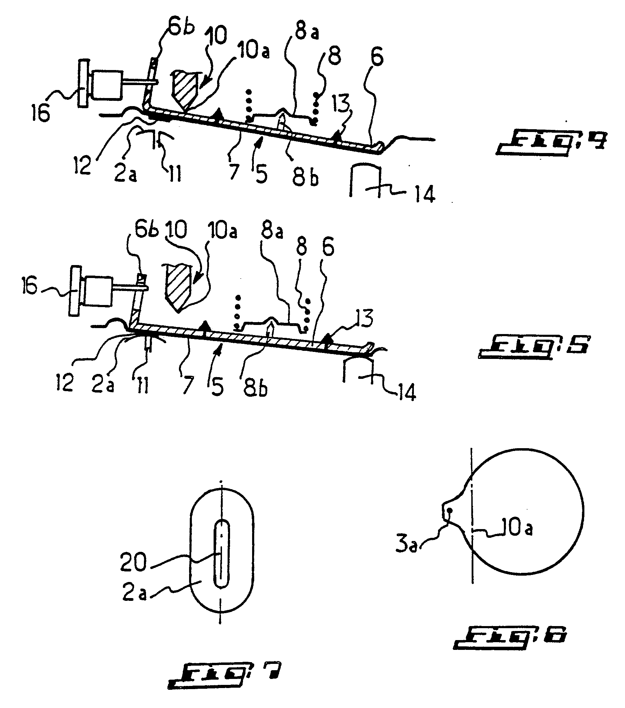

A cet effet, et suivant l'exemple de réalisation représenté sur la figure 2, on prévoit un élément 10 faisant saillie vers l'intérieur du détendeur et sur lequel peut prendre appui et pivoter le plateau 6 de la membrane 5, de façon que cette membrane possède une fonction de levier susceptible d'obturer l'orifice 11 d'entrée du gaz dans l'appareil. L'élément 10, suivant l'exemple représenté, est constitué par un ou plusieurs têtons venant de matière avec le couvercle 4.

La partie souple et déformable 7 de la membrane 5 peut prendre directement appui sur le siège 2a, ladite partie souple pouvant comporter à ce niveau une surépaisseur formant clapet et montrée schématiquement en 12. Mais une telle surépaisseur n'est nullement obligatoire.

Le plateau 6 est percé de trous permettant de le rendre solidaire de la membrane souple 7 par l'intermédiaire de pions ou analogues 13.

L'un de ces pions est situé au niveau d'un embouti 6a sur le plateau 6 permettant le centrage du ressort de tarage 8, tandis que l'autre pion, comme on le voit bien sur la figure 2, est situé au niveau du clapet 12.

Revenant à l'élément 10, on voit que sa position est telle qu'elle partage la membrane 5 en deux surfaces ou portions inégales, à savoir une surface relativement petite à gauche de l'élément 10, et une surface relativement grande à droite dudit élément.

Une butée 14 solidaire du corps 1 et située du côté de la surface relativement grande de la membrane 5 sensiblement au droit du ressort de tarage 8, permet de limiter la course de la membrane 5, notamment lors du montage de l'appareil.

On a montré en 15 une deuxième butée, également solidaire du corps 1 de l'appareil, mais qui est située sensiblement au droit de l'élément 10. Cette deuxième butée 15 sert à empêcher que le détendeur se déclenche sous l'effet d'une chute de pression, c'est-à-dire que la membrane 5 ferme l'orifice 11. Autrement dit, si après un incident, le gaz est remis, le détendeur refonctionne aussitôt. Mais on expliquera brièvement ci-après le fonctionnement du détendeur représenté sur la figure 2.

Sur cette figure, le détendeur est représenté comme s'il était alimenté en gaz. Le débit demandé à la sortie 3 étant nul, la pression du gaz s'exerce sous la membrane 5. Plus précisément, dans ce cas-là, le plateau 6 vient en appui de pivotement sur le ou les éléments 10, de sorte que le clapet 12 est appliqué sur le siège 2a.

On remarquera ici que le couple exercé sur la partie droite de la membrane 5 est nettement supérieur au couple inverse exercé sur la partie gauche de cette membrane, de sorte que ladite membrane, en pivotant sur l'extrémité libre ou arête 10a de l'élément 10, viendra obturer convenablement le siège 2a.

Si on procède à une demande de débit de gaz en 3, la pression du gaz diminuera et, comme on le comprend, le ressort de tarage 8 fera pivoter la membrane en sens inverse de façon à ouvrir ainsi progressivement l'arrivée du gaz par l'orifice 11.

Enfin, on remarquera que si l'appareil est hors pression, c'est-à-dire si aucun gaz sous pression ne parvient au raccord 2, la membrane 5 s'affaissera sous l'effet de la compression du ressort 8. Plus précisément, la membrane prendra appui sur la butée 14, et également sur la butée 15 pour prendre ainsi une position inclinée et laissant ouvert l'orifice 11 du siège 2a. Dès lors, si du gaz est envoyé par le raccord 2, il pourra passer par l'orifice 11 et le détendeur se remettra en marche aussitôt pour réguler la pression du gaz parvenant à l'installation.

Le mode de réalisation illustré par la figure 3 est conçu suivant le même principe que celui du détendeur de la figure 2, et on a utilisé les mêmes repères pour désigner les éléments communs. Mais dans ce cas-là, la butée 15 a été supprimée, car ici, on a prévu un robinet 16 pouvant agir positivement sur la membrane 5 pour obturer le siège 2a et permettant également de réarmer le détendeur après déclenchement.

Le robinet 16, suivant un mode de réalisation préféré, comporte un excentrique 17 pouvant se débattre dans une lumière 18 ménagée dans un bord 6b du plateau 6 de la membrane 5, lequel bord 6b, comme on le voit sur la figure 3, est tourné vers le couvercle 4.

Le détendeur suivant la figure 3 fonctionne comme celui de la figure 1, et on décrira très brièvement ce fonctionnement en se reportant plus particulièrement aux figures 4 et 5. On partira de la position visible sur la figure 3, et dans laquelle le robinet 16 est représenté en position «fermé», étant bien entendu qu'une rotation d'un quart de tour de ce robinet permet de libérer le plateau 6 de la membrane 5.

Si l'appareil débite du gaz, la membrane 5 prend alors la position visible sur la figure 4 en pivotant sur l'arête 10a de l'élément 10.

Si la pression du gaz s'abaisse en dessous d'une valeur déterminée, par exemple en raison d'une chute de pression à l'amont du détendeur, ou bien d'un débit demandé trop important, la membrane s'affaisse sous l'effet du ressort de tarage 8, de sorte qu'elle vient en appui sur la butée 14, puis quitte l'élément 10 pour finalement venir obturer le siège 2a comme on le voit bien sur la figure 5.

L'appareil se trouve donc déclenché par défaut de pression, et, pour le réarmer, il suffit de tourner le robinet 16 en position de fermeture pour se retrouver dans le cas de la figure 3.

On notera ici que si le siège 2a ne peut pas être obturé correctement par suite de la position inclinée de la membrane visible sur la figure 5, on pourra adopter un siège 2a de grande section et muni d'un orifice 20 de forme oblongue, comme on le voit bien sur la figure 7. Le détendeur peut bien sûr, sans sortir du cadre de l'invention, comprendre toutes ces variantes ou seulement l'une ou l'autre de celles-ci.

Quant à la membrane équipant les modes de réalisation décrits et illustrés, sa forme pourra être choisie de façon par exemple à diminuer fortement le couple antagoniste exercé par la pression à gauche de l'élément 10, et cela en diminuant la surface de cette partie de la membrane, comme on le voit sur la figure 6, sur laquelle a été matérialisée la position de l'arête 10a de l'élément 10, de même que l'axe 3a du siège 2a.

Le ressort de tarage 8 peut prendre directement appui sur la membrane 5 (figure 2), ou bien indirectement par l'intermédiaire d'une rondelle 8a pivotant sur un petite axe 8b solidaire du plateau 6 (figure 3). On peut parfaitement remplacer le ressort de tarage 8 par une lame élastique 21 représentée en traits pointillés sur la figure 2, cette lame étant par exemple solidaire de l'élément 10 et prenant élastiquement appui sur le plateau 6 de la membrane 5. On pourrait également, sans sortir du cadre de l'invention, remplacer le ressort de tarage 8 par une barre ou un ressort de torsion (non représenté) agencé au niveau de l'extrémité 10a de l'élément 10.

On comprend également que les positions respectives du siège 2a, de l'élément 10 et du ressort de tarage permettent de faire varier à volonté et en fonction des besoins, les différents couples exercés sur la membrane ainsi que les caractéristiques du détendeur.

Bien entendu, l'invention n'est nullement limitée aux modes de réalisation décrits et illustrés qui n'ont été donnés qu'à titre d'exemple.

## Revendications

1. Appareil détendeur pour gaz du type comprenant un corps (1) avec raccord d'entrée (2) et de sortie (3) de gaz, un couvercle (4) monté sur ce corps, une membrane manométrique (5) montée entre corps et couvercle et sur une face de laquelle s'exerce la pression du gaz à contrôler et sur l'autre face de laquelle s'exerce l'action d'un ressort de tarage (8), et au moins une première butée (10) faisant saillie depuis le couvercle (4) vers l'intérieur du détendeur et sur laquelle peut prendre appui et pivoter une partie rigide de ladite membrane, la position de cette butée (10) sur le couvercle étant telle qu'elle partage en deux portions inégales ladite membrane qui possède ainsi une fonction de levier susceptible d'obturer l'entrée du gaz dans le corps de l'appareil, caractérisé en ce qu'il comporte:

— une deuxième butée (14) de limitation de course de la membrane manométrique (5), cette deuxième butée étant solidaire du corps (1) de l'appareil et située du côté de la portion relativement grande de ladite membrane,

— et/ou une troisième butée (15) solidaire du corps (1) de l'appareil, située sensiblement au droit de ladite première butée (10), et empêchant la membrane (5) d'obturer l'orifice (11) d'entrée du gaz (2) dans l'appareil en cas d'incident tel que par exemple une chute de pression.

2. Appareil détendeur selon la revendication 1, caractérisé en ce que la membrane manométrique (5) étant constituée par un plateau (6) solidaire d'une membrane souple et déformable (7), ledit plateau comporte un bord (6b) tourné vers le haut et muni d'une ouverture (18) coopérant avec un système à excentrique (17) formant un robinet (16) susceptible d'agir positivement sur la membrane (5) et remplaçant la troisième butée (15) qui est omise, alors que la deuxième butée (14) subsiste.

## Patentansprüche

1. Gasdruckminderventil der Gattung, die ein Gehäuse (1) mit einem Gaseinlaßanschluß (2) und einem Gasauslaßanschluß (3), einen auf diesem Gehäuse montierten Deckel (4), eine zwischen dem Gehäuse und dem Deckel montierte manometrische Membran (5), auf deren einer Seite das zu kontrollierende Gas einen Druck ausübt und auf deren anderer Seite eine Tarierungsfeder (8) ihre Wirkung ausübt, und wenigstens einen ersten, vom Deckel (4) in Richtung auf das Innere des Druckminderventils ausragenden Anschlag (10), auf dem ein steifer Teil der besagten Membran sich stützen und schwenken kann, aufweist, wobei die Stellung dieses Anschlags (10) auf dem Deckel derart ist, daß er die besagte Membran in zwei ungleiche Teile teilt, welche Membran dann als Hebel wirkt, der dazu fähig ist, den Einlaß des Gases in das Gehäuse des Druckminderventils zu verschließen, dadurch gekennzeichnet, daß es:

— einen zweiten Anschlag (14) zur Begrenzung des Laufs der manometrischen Membran (5) aufweist, wobei dieser zweite Anschlag mit dem Gehäuse (1) des Druckminderventils einstückig ist und sich auf der Seite des relativ großen Teils der besagten Membran befindet,

— und/oder einen mit dem Gehäuse (1) des Druckminderventils einstückigen dritten Anschlag (15) aufweist, der im wesentlichen senkrecht unter dem besagten ersten Anschlag (10) liegt, und der die Membran (5) davon abhält, die Öffnung (11) des Einlasses (2) des Gases in das Druckminderventil zu verschließen im Falle einer Störung wie zum Beispiel einem Druckabfall.

2. Druckminderventil nach Anspruch 1, dadurch gekennzeichnet, daß die manometrische Membran (5) aus einer mit einer nachgiebigen und verformbaren Membran (7) einstückigen Platte (6) besteht, wobei die besagte Platte einen nach oben gerichteten Rand (6b) aufweist, der mit einer Öffnung (18) ausgerüstet ist, die mit einem einen Hahn (16) bildenden System (17) mit Excenter zusammenarbeitet, wobei der Hahn dazu fähig ist, auf die Membran (5) positiv zu wirken und den dritten weggelassenen Anschlag (15) ersetzt, während der zweite Anschlag (14) noch vorhanden ist.

## Claims

1. Gas pressure reducing apparatus of the type including a casing (1) with a gas inlet connection (2) and a gas outlet connection (3), a cover (4) mounted on the said casing, a manometric membrane (5) mounted between the casing and the cover and one face of which is subjected to the pressure of the gas to be controlled and the other face of which is subjected to the action of an adjustment spring (8), and at least one first stop (10) extending from the cover (4) towards the interior of the apparatus and on which is adapted to bear and pivot a rigid portion of the said membrane, the position of this stop (10) on the cover being such that it divides into two unequal portions the said membrane which thus fulfils the function of a lever adapted to close the gas inlet into the casing of the apparatus, characterized in that it comprises:

– a second stop (14) for limiting the travel of the manometric membrane (5), this second stop being connected with the casing (1) of the apparatus and directed towards the relatively large portion of the said membrane,

– and/or a third stop (15) connected with the casing (1) of the apparatus, located below, and substantially aligned with the said first stop (10), and preventing the membrane (5) from closing the hole (11) for the admission (2) of the gas into the apparatus in case of incident, such for example as a pressure drop.

2. Gas pressure reducing apparatus according to claim 1, characterized in that the manometric membrane (5) is constituted by a plate (6) solid with a flexible and deformable membrane (7), the said plate comprising an upwardly directed flange (6b) provided with an opening (18) co-operating with an eccentric means (17) constituting a cock (16) adapted to positively act on the membrane (5) and replacing the third stop (15) which is omitted, whereas the second stop (14) remains.

FIG. 1

FIG. 2

FIG. 3

FIG. 4

FIG. 5

FIG. 7

FIG. 6